# EUROPEAN PATENT SPECIFICATION

(11) **EP 0 589 195 B1**
(45) Date of publication and mention of the grant of the patent: **27.01.1999**
(21) Application number: 93112818.5
(22) Date of filing: 10.08.1993
(51) Int. Cl.: G07D 7/00, G07F 7/12, G06K 19/12, G07F 7/08

(54) **A method and an apparatus for checking objects to be checked for authenticity**
Vorrichtung und Verfahren zum Prüfen der Authentizität von Gegenständen
Méthode et dispositif pour tester l'authenticité d'objects

(30) Priority: 25.09.1992 JP 256888/92; 28.12.1992 JP 348376/92
(43) Date of publication of application: 30.03.1994
(73) Proprietor: NHK SPRING CO., LTD., Yokohama-shi (JP)
(72) Inventor: Hoshino, Hidekazu, c/o NHK Spring Co.,Ltd., Yokohama-shi (JP); Yoda, Masumi, c/o NHK Spring Co.,Ltd., Yokohama-shi (JP); Takeuchi, Ituso, c/o NHK Spring Co.,Ltd., Yokohama-shi (JP); Kurihara, Tatsuya, c/o NHK Spring Co.,Ltd., Yokohama-shi (JP)
(74) Representative: Henkel, Feiler, Hänzel

(56) References cited:
- EP-A- 0 260 940
- EP-A- 0 275 117
- WO-A-87/05728
- US-A- 4 094 462
- US-A- 4 218 674
- US-A- 4 820 912

## Description

The present invention relates to a method and an apparatus for checking important documents, securities, paper money, cards, art objects, and other checking objects which should be checked for authenticity.

A checking method and apparatus utilizing microwaves are conventionally known as measures for checking the authenticity of documents and the like, as described in U.S. Pat. No. 4,820,912. According to this prior art, microwaves are applied to a number of particles which are distributed at random in each document, and a proper digital mark responsive to a response microwave bundle are recorded in a suitable region of the document according to specific rules. In checking the authenticity of the document, microwaves are applied to the document, and the response microwave bundle is collated with the digital mark. The document is judged to be real when the microwave bundle and the mark agree with each other.

According to the prior art checking means based on the microwaves, however, measuring the response microwave bundle is susceptible to external noises, so that a satisfactory signal-to-noise ratio cannot be enjoyed. Used to oscillate the microwaves, moreover, the aforesaid prior art apparatus may possibly constitute a source of noises. Generally, furthermore, a microwave transmitter and receiver are large-sized, and entail high costs.

Another object verification apparatus and method are disclosed in EP-A-0 275 117. In this prior art a selected region of the object is provided with magnetic particles, which region is detected while being moved past a detection sensor. The resulting signal is compared to a prestored retrieved information relating to this region. The detection region is formed as a continuously extending recordable magnetic region in the form of a magnetic tape adhered to the object or as a continuous coating layer respectively containing magnetic material of a high coercive force. The movement of the magnetic region past the sensor induces an electrical signal due to the inherent variations in the magnetic region.

The object of the present invention is to provide an arrangement such that the authenticity of checking objects can be checked without producing a source of noises, by means of a low-cost compact apparatus with a high signal-to-noise ratio.

This object is solved by the method defined in claims 1 and 5 and by the apparatus as defined in claims 3 and 6.

A first checking method according to the present invention, developed in order to achieve the above object, is a method for checking the authenticity of a checking object which includes a base formed of a nonmagnetic material and a number of high-permeability magnetic elements dispersed in a scanning region of the base, comprising: a manufacturing process for manufacturing the checking object; and a collating process for checking the checking object, the manufacturing process including an excitation step of applying a bias magnetic field and moving the scanning region relatively to the magnetic field, a step of picking up a change on standing of a magnetic flux, which varies depending on the distribution of the magnetic elements, thereby detecting a detection signal for the change of the magnetic flux, as the scanning region passes through the magnetic field, a step of obtaining a cipher code by enciphering the detection signal, and a step of recording the cipher code in a code indicator section of the checking object, and the collating process including the excitation step, the detection step, a step of reading the cipher code recorded in the code indicator section, a step of reproducing a code for collation by decoding the cipher code, and a step of collating the collation code reproduced in the code reproduction step with the detection signal detected in the detection step and concluding that the checking object is real when the collation code and the detection signal correspond to each other.

According to this checking method, the magnetic flux varies with the change of the permeability, which depends on the distribution of the magnetic elements, as the scanning region passes through the bias magnetic field. A detection signal for this change of the magnetic flux is utilized for the check of checking object. This detection signal varies for each minute portion of the scanning region, depending on the density, size, or orientation of the magnetic elements dispersed in the scanning region. Thus, a detection signal having an output pattern proper to each scanning region can be obtained.

A first apparatus according to the present invention comprises: exciting means for applying a DC bias magnetic field to the scanning region; a transportation mechanism for moving the scanning region relatively to the magnetic field at a predetermined speed; detecting means for picking up a change on standing of a magnetic flux, which varies depending on the distribution of the magnetic elements, thereby detecting a detection signal for the change of the magnetic flux, as the scanning region passes through the bias magnetic field; code writing means for recording a code corresponding to the detection signal in the code indicator section of the checking object; reading means for reading the code recorded in the code indicator section; and means for collating the code read by the reading means with the detection signal detected by the detecting means and concluding that the checking object is real when the read code and the detection signal correspond to each other.

The exciting means may be formed of a permanent magnet or arranged so that the bias magnetic field is obtained by causing a DC current to flow through an exciting coil on a core. A high-permeability alloy material is a suitable material for the core.

A second checking method according to the present invention comprises: a manufacturing process for manufacturing the checking object; and a collating process for checking the checking object, the manufacturing process including an excitation step of applying a magnetic field to the magnetic elements within the scanning region by means of a magnetic field generator while passing the scanning region between the magnetic field generator and a magnetic sensor, a step of detecting a detection signal for a change on standing of the magnetic shielding effect, which varies depending on the distribution of the magnetic elements, by means of the magnetic sensor, as the scanning region crosses the magnetic field, a step of obtaining a cipher code by enciphering the detection signal, and a step of recording the cipher code in a code indicator section of the checking object, and the collating process including the excitation step, the detection step, a step of reading the cipher code recorded in the code indicator section, a step of reproducing a code for collation by decoding the cipher code, and a step of collating the collation code reproduced in the code reproduction step with the detection signal detected in the detection step and concluding that the checking object is real when the collation code and the detection signal correspond to each other.

A second apparatus according to the present invention comprises: a first exciting coil for applying a first alternating field to the scanning region; a first magnetic sensor opposed to the first exciting coil; a transportation mechanism for passing the scanning region between the first exciting coil and the first magnetic sensor; a second exciting coil situated in a position magnetically isolated from the first exciting coil and used to generate a second alternating field identical with the first alternating field; a second magnetic sensor opposed to the second exciting coil; a circuit for fetching a detection signal corresponding to the difference between an output produced in the first magnetic sensor and an output produced in the second magnetic sensor as the scanning region passes between the first exciting coil and the first magnetic sensor; code writing means for recording a code corresponding to the detection signal in the code indicator section of the checking object; reading means for reading the code recorded in the code indicator section; and means for collating the code read by the reading means with the detection signal and concluding that the checking object is real when the read code and the detection signal correspond to each other.

The magnetic elements according to the present invention may suitably be made by a wire member formed of a high-permeability alloy material (such as Co-Fe-Si-B-based amorphous alloy, Fe-Ni alloy, or permalloy), a flake of the same alloy, or a combination of these. In the description herein, a high permeability is one which provides the maximum specific permeability (µ) of 10,000 or more.

According to the present invention, the scanning region is scanned magnetically, so that the apparatus can enjoy a smaller size and lower costs than the checking means which uses microwaves. Since the magnetic elements can be detected even in a scanty magnetic field, the apparatus can avoid producing noises. Also, the signal-to-noise ratio is high, and the reproducibility is satisfactory.

The present invention is applicable to authenticity check of papers, such as securities, paper money, important documents, etc., or plastic cards, such as ID cards, CD cards, credit cards, etc., prevention of forgery of art objects, or discrimination of the real from the false.

This invention can be more fully understood from the following detailed description when taken in conjunction with the accompanying drawings, in which:
Fig. 1 is a side view, partially in section, showing an outline of a processing apparatus according to an embodiment of the present invention;
Fig. 2 is a plan view showing an example of a checking object;
Fig. 3 is a diagram showing an output voltage produced as the checking object is scanned;
Fig. 4 is a flow chart showing a process for manufacturing the checking object;
Fig. 5 is a flow chart showing a collating process for checking the authenticity of the checking object; and
Fig. 6 is a side view, partially in section, showing a processing apparatus according to another embodiment of the invention.

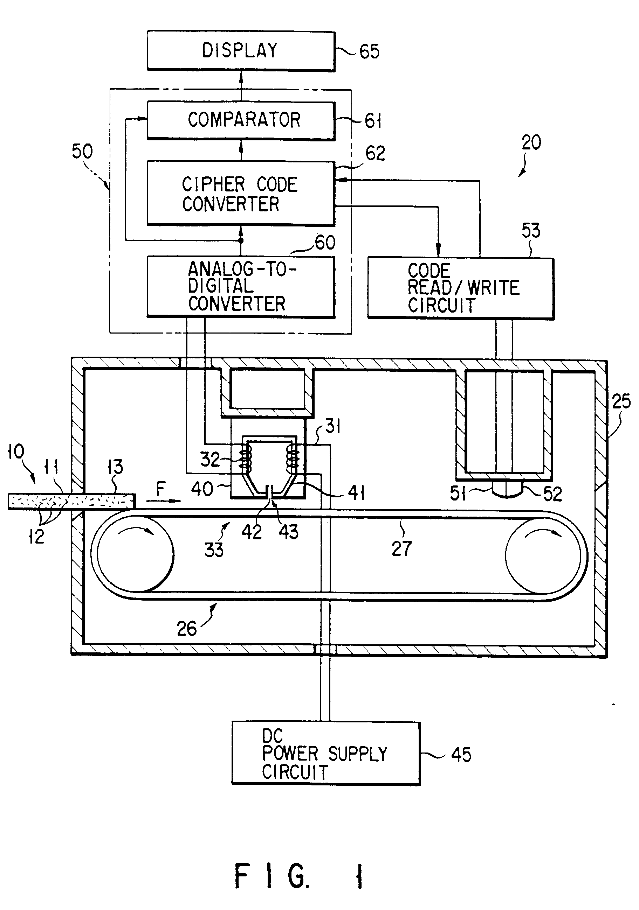

Referring now to Figs. 1 to 5, a first embodiment of the present invention will be described.

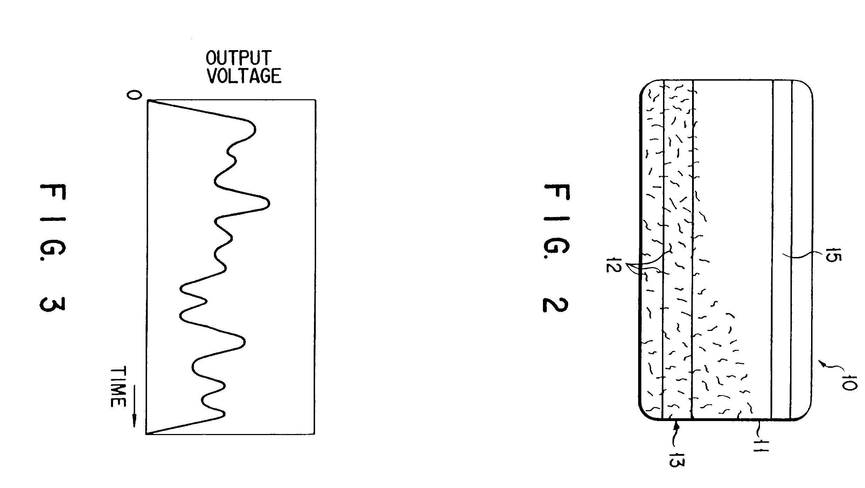

As shown in Fig. 2, a number of high-permeability magnetic elements 12 are dispersed at random in a base 11 of a checking object 10 so as to be oriented in many and unspecified directions. The base 11 is formed of a nonmagnetic material such as paper, plastics, etc. Each magnetic element 12 may, for example, be in the form of a wire of a high-permeability alloy material having a diameter of about 7 to 50 µm and length of about 5 to 30 mm. Alternatively, the element 12 may be formed of a leaf of a high-permeability alloy material having a thickness of about 7 to 50 µm and length of about 5 to 30 mm. These elements 12 are dispersed into a specific scanning region 13 so as to enjoy a certain measure of density when the checking object 10 is manufactured.

The checking object 10 is provided with the scanning region 13 and a code indicator section 15. Informations corresponding to the magnetic elements 12 within the scanning region 13 are enciphered and written in the indicator section 15. The checking object 10 is magnetically scanned by means of a processing apparatus 20 shown in Fig. 1. The processing apparatus 20 comprises a housing 25 and a transportation mechanism 26. The mechanism 26 is arranged so that the object 10 is moved at constant speed in the direction of arrow F of Fig. 1 by means of a transportation member 27, formed of a belt, rollers, etc.

A coil pair 33 for induction voltage detection, formed of an exciting coil 31 and a sensor coil 32, is provided in the middle of the path of movement of the checking object 10. The coils 31 and 32 are arranged on a core 41 of a sensor head 40. The core 41, which is formed of a high-permeability alloy material, has a gap 42, and constitutes a closed magnetic circuit. The length of the gap 42 ranges from about 30 to 100 µm.

A sensing section 43 is located in the vicinity of gap 42 so that the scanning region 13 passes through the section 43. The exciting coil 31 is connected with a DC power supply circuit 45 for applying a DC bias magnetic field to the core 41. As an electric current is caused to flow through the coil 31, fixed quantities of magnetic fluxes pass through the core 41, and part of the bias magnetic field passes through the sensing section 43.

Possibly, one coil may be used to fulfill the functions of both the exciting coil 31 and the sensor coil 32. In this case, the reduced coil number permits a reduction in cost. Although the coil 32 is used as an example of a magnetic sensor according to the embodiment described above, a magnetic sensing element, such as a Hall element, may be used in place of the coil 32.

The processing apparatus 20 further comprises a controller 50 formed of a microcomputer or the like, a code writing unit 51 for recording the following cipher code in the code indicator section 15 of the checking object 10, a code reading unit 52 for reading the cipher code recorded in the indicator section 15, etc. The units 51 and 52 are connected to a code read/write circuit 53. The controller 50 includes an analog-to-digital converter 60, a comparator 61, a cipher code converter 62, etc. A display 65 is connected to the controller 50.

The following is a description of the operation of the apparatus 20 according to the above-described embodiment.

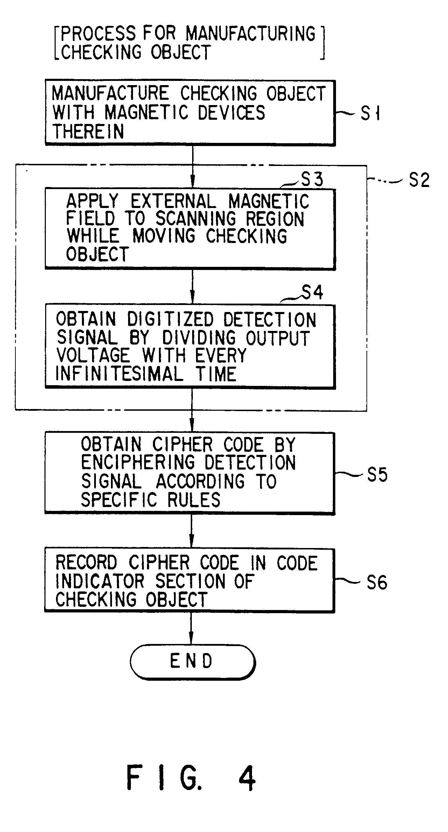

Fig. 4 shows an outline of a process for manufacturing the checking object 10. In Step S1, the magnetic elements 12 are dispersed into the base 11 of the object 10 as the base 11 is manufactured. In Step S2 for scanning, the object 10 is moved in the direction of arrow F at a predetermined speed by means of the transportation mechanism 26. Step S2 includes Step S3 for excitation and Step S4 for detection.

In Step S3, a DC current is caused to flow through the exciting coil 31 by means of the DC power supply circuit 45, thereby applying the DC bias magnetic field to the core 41 in advance. If none of the magnetic elements 12 exist in the sensing section 43 of the core 41, the permeability of the gap 42 remains in its initial state, so that the magnetic fluxes passing through the core 41 are uniform. Accordingly, no electromagnetic induction voltage can be produced in the coil 32, so that the voltage delivered to the controller 50 is substantially zero.

When the scanning region 13 is passed through the sensing section 43 by moving the checking object 10 in the direction of arrow F at the predetermined speed by means of the transportation mechanism 26, a plurality of minute portions of the scanning region 13 successively pass through the sensing section 43. At this time, the permeability of the gap 42 changes with the passage of time, depending on the conditions of the magnetic elements 12, so that the number of the magnetic fluxes passing through the core 41 varies. As a result, an electromagnetic induction voltage is produced in the sensor coil 32.

Since this induction voltage changes its level depending on the density, diameter (or thickness), length, direction, etc. of the magnetic elements 12, it is measured as an output voltage pattern, as illustrated in Fig. 3. In this embodiment, the scanning region 13 is divided with every infinitesimal time for detection, and output voltages for the individual infinitesimal times are ranked in a plurality of stages and digitized, in Step S4. Thus, an encoded detection signal proper to the scanning region 13 can be obtained.

This detection signal is enciphered according to specific rules by means of the cipher code converter 62 in Step S5 for encipherment. The resulting cipher code is recorded in the code indicator section 15 by means of a magnetic head of the code writing unit 51 in Step S6 for writing. Although the indicator section 15 of this embodiment is a magnetic stripe, the cipher code may be recorded in the form of a bar code in the indicator section 15 by means of, for example, a print head.

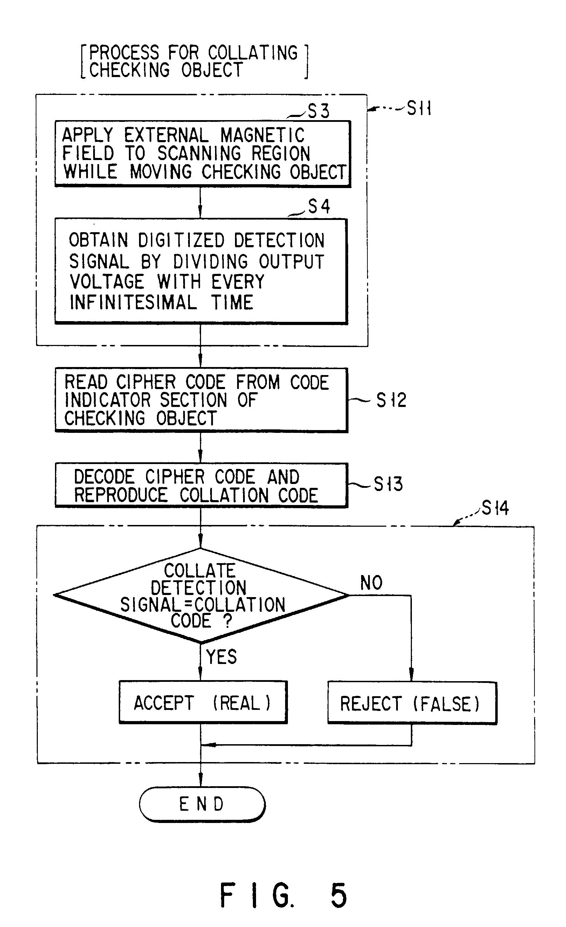

The authenticity of the checking object 10 can be also checked by using the processing apparatus 20. Fig. 5 shows an outline of a collating process for checking the authenticity of the object 10. Step S11 for scanning includes Step S3 for excitation and Step S4 for detection, which are identical with those of the aforementioned process for manufacturing the checking object 10. A detection signal corresponding to the distribution of the magnetic elements 12 is obtained by scanning the scanning region 13 at a predetermined speed.

In Step S12 for code reading, the cipher code recorded in the code indicator section 15 is read by means of the code reading unit 52. As this code is decoded according to specific rules by means of the cipher code converter 62 in Step S13 for code reproduction, a code for collation is reproduced. In Step S14 for discrimination, the collation code and the detection signal detected in Step S4 for detection are compared by means of the comparator 61, and it is concluded that the checking object 10 is real only when the code and the signal agree with each other. The result of the collation is indicated on the display 65.

According to the processing apparatus 20, the scanning region 13 can be detected even if the external magnetic fields applied to the checking object 10 are weak. Even though the cipher code and other informations are magnetically recorded in the code indicator section 15 or other areas, therefore, these magnetic informations can never be destroyed. Since an induction voltage detection signal is obtained by means of the core 41, having the gap 42, and the coil 32, moreover, it is not susceptible to external noises.

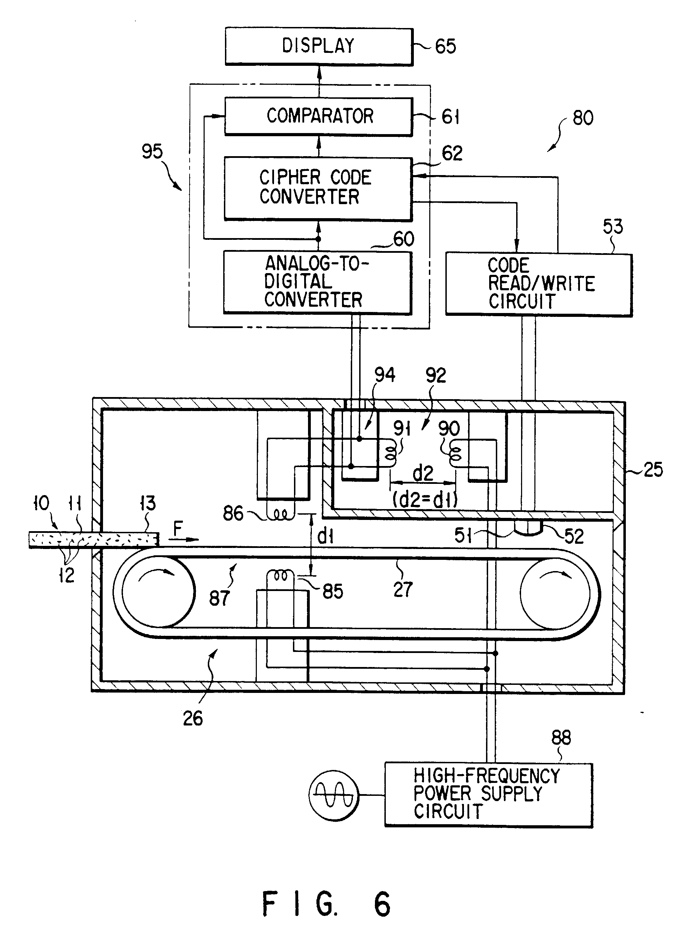

Referring now to Fig. 6, a second embodiment of the present invention will be described. A processing apparatus 80 shown in Fig. 6 is designed so that a first exciting coil 85, for use as a magnetic field generator, and a first sensor coil 86, for use as a magnetic field sensor, are arranged in the middle of a path along which the checking object 10 moves. These coils 85 and 86, which constitute a coil pair 87 for permeability detection, are arranged at a distance d1 from each other. The scanning region 13 of the checking object 10 is passed between the coils 85 and 86 by means of the transportation mechanism 26. The exciting coil 85, which is connected to a high-frequency power supply circuit 88, serves to apply an alternating field to the magnetic elements 12 within the scanning region 13.

Further, a coil pair 92 for comparison, which is formed of a second exciting coil 90 and a second sensor coil 91, is located in a position magnetically isolated from the first exciting coil 85. A distance d2 between the second exciting coil 90 and the second sensor coil 91 is equal to the distance d1 between the first coils 85 and 86.

The first and second exciting coils 85 and 90 have the same electromagnetic properties (inductance, resistance, coil wire diameter, number of coil turns, etc.). Likewise, the first and second sensor coils 86 and 91 have the same electromagnetic properties. Further, the first and second exciting coils 85 and 90, which are in the same phase, are connected to the high-frequency power supply circuit 88. The first and second sensor coils 86 and 91, which are in opposite phases, are connected to a controller 95 through a differential voltage fetch circuit 94.

The processing apparatus 80 comprises the controller 95 formed of a microcomputer or the like, as well as the same code writing unit 51, code reading unit 52, code read/write circuit 53, etc. as are used in the foregoing embodiment. The coils 86 and 91 may be replaced with magnetic sensing elements, such as Hall elements, which utilize the galvanomagnetic effect.

In manufacturing the checking object 10, the magnetic elements 12 are dispersed into the base 11, as in Step S1 of the manufacturing process of Fig. 4 described in connection with the foregoing embodiment. Then, in Step S2 for scanning, the object 10 is moved in the direction of arrow F at a predetermined speed by means of the transportation mechanism 26, whereby the scanning region 13 is scanned. In this processing apparatus 80, an alternating current of a high frequency (e.g., 500 to 1,000 Hz) is applied to the first and second exciting coils 85 and 90 by means of the high-frequency power supply circuit 88. In this case, equal alternating fields are generated in the coils 85 and 90 which are connected in the same phase, so that equal electromagnetic induction voltages are produced in the sensor coils 86 and 91 before the scanning region 13 is scanned.

If it is concluded in Step S3 that the checking object 10 is not situated between the first exciting coil 85 and the first sensor coil 86, the voltages produced in the first and second sensor coils 86 and 91, which are in the opposite phases, are equal, so that the voltage delivered to the controller 50 remains zero. When the scanning region 13 passes between the first exciting coil 85 and the first sensor coil 86, the voltage produced in the coil 86 is lowered by the magnetic shielding effect of the magnetic elements 12. Since the magnetic elements 12 are not situated between the second exciting coil 90 and the second sensor coil 91, on the other hand, the output of the coil 91 makes no change. Accordingly, a voltage corresponding to the difference between the voltages produced in the first and second sensor coils 86 and 91 is delivered to the analog-to-digital converter 60.

The higher the density of the magnetic elements 12, the greater the aforesaid magnetic shielding effect is. Thus, the higher the density of the elements 12, the higher or greater the aforesaid output voltage or the output difference between the first and second sensor coils 86 and 91 is. When Step S3 for excitation is executed while moving the checking object 10 in the direction of arrow F at the predetermined speed by means of the transportation mechanism 26, therefore, the minute portions of the scanning region 13 successively pass between the first exciting coil 85 and the first sensor coil 86, so that the change of density of the magnetic elements 12 is detected in the form of an output voltage pattern. In Step S4, this output voltage is detected with every infinitesimal time, and the output voltages for the individual infinitesimal times are ranked in a plurality of stages and converted into digital values. Thus, an encoded detection signal proper to the scanning region 13 can be obtained.

This detection signal is converted into a cipher code by means of the cipher code converter 62 in Step S5 for encipherment. The cipher code is recorded in the code indicator section 15 by means of the magnetic head of the code writing unit 51 in Step S6 for writing.

The authenticity of the checking object 10 can be also checked by using the processing apparatus 80. In Step S11 for scanning which includes Step S3 for excitation and Step S4 for detection, as in the collating process shown in Fig. 5, the detection signal for the scanning region 13 corresponding to the distribution of the magnetic elements 12 is obtained by scanning the region 13.

In Step S12 for code reading, the cipher code recorded in the code indicator section 15 is read by means of the code reading unit 52. As this code is decoded according to the specific rules by means of the cipher code converter 62 in Step S13 for code reproduction, the code for collation is reproduced. In Step S14 for discrimination, the collation code and the detection signal detected in Step S4 for detection are compared by means of the comparator 61, and it is concluded that the checking object 10 is real when the code and the signal agree with each other.

According to the present invention, moreover, the magnetic elements 12 may be embedded in the back of the canvas of a picture, for example. In this case, a cipher code, similar to the ones according to the foregoing embodiments, is recorded in a code indicator section, whereby the picture can be proved to be authentic. If the magnetic elements 12 according to the invention are embedded in art objects in three dimensions, furthermore, the original objects can be distinguished from imitations.

## Claims

1. A method for checking the authenticity of a checking object (10) which includes a base (11) formed of a nonmagnetic material and a number of high-permeability magnetic elements (12) randomly dispersed in a scanning region (13) of the base (11), comprising a manufacturing process for manufacturing the checking object (10) and a collating process for checking the checking object (10),
wherein the manufacturing process includes the following steps:
an excitation step (S3) of applying a bias magnetic field to said high-permeability magnetic elements (12) dispersed in said scanning region (13) and moving the scanning region (13) relatively to the magnetic field,
a step (S4) of picking up a change in stand of a magnetic flux, which varies depending on the distribution of said high-permeability magnetic elements (12), thereby detecting a detection signal for the change of the magnetic flux, as the scanning region (13) passes through the magnetic field,
a step (S5) of obtaining a cipher code by enciphering the detection signal, and
a step (S6) of recording the cipher code in a code indicator section (15) of the checking object (10); and
wherein the collating process includes the following steps:
an excitation step (S3) of applying the bias magnetic field to said high-permeability magnetic elements (12) dispersed in said scanning region (13) and moving the scanning region (13) relatively to the magnetic field,
a step (S4) of picking up the change in standing of the magnetic flux, which varies depending on the distribution of said high-permeability magnetic elements (12), thereby detecting the detection signal for the change of the magnetic flux, as the scanning region (13) passes through the magnetic field,
a step (S12) of reading the cipher code recorded in the code indicator section (15),
a step (513) of reproducing a code for collation by decoding the cipher code, and
a step (S14) of collating the collation code reproduced in the code reproduction step (S13) with the detection signal detected in the detection step (S4) and concluding that the checking object (10) is real when the collation code and the detection signal correspond to each other.

2. A checking method according to claim 1, wherein said excitation step (S3) includes the step of applying the bias magnetic field to a core (41) having a gap (42) by means of an exciting coil (31) and a DC power supply circuit (45), and said picking-up step (S4) includes the step of detecting the detection signal for the change of the magnetic flux, which is caused as the permeability of the gap (42) varies depending on the distribution of the magnetic elements (12), by means of a coil (32) for induction voltage detection.

3. An apparatus for checking the authenticity of a checking object (10) which includes a base (11) formed of a nonmagnetic material, a scanning region (13) provided in the base (11), a code indicator section (15) provided in the base (11), and a number of high-permeability magnetic elements randomly dispersed in the scanning region; said apparatus comprising
a transportation mechanism (26) for moving the checking object (10);
scanning means for scanning the scanning region (13), wherein said scanning means includes exciting means (31,41,45) for applying a DC bias magnetic field to said high-permeability magnetic elements dispersed in the scanning region (13), and detecting means (32) for picking up a change in standing of a magnetic flux, which varies depending on the distribution of said high-permeability magnetic elements (12), thereby detecting a detection signal for the change of the magnetic flux, as the scanning region (13) passes through the bias magnetic field;
code writing means (51) for recording a code corresponding to the detection signal in the code indicator section (15) of the checking object (10);
reading means (52) for reading the code recorded in the code indicator section (15); and
means (50) for collating the code read by the reading means (52) with the detection signal detected by the detecting means (32) and concluding that the checking object (10) is real when the read code and the detection signal correspond to each other.

4. An apparatus according to claim 3, wherein said exciting means (31,41,45) includes a core (41) having a gap (42), an exciting coil (31) on the core (41), and a DC power supply circuit (45) connected to the coil (31), and said detecting means (32) is a coil (32) for induction voltage detection on the core (41).

5. A method for checking the authenticity of a checking object (10) which includes a base (11) formed of a nonmagnetic material and a number of high-permeability magnetic elements (12) randomly dispersed in a scanning region (13) of the base (11), comprising a manufacturing process for manufacturing the checking object (10) and a collating process for checking the checking object (10),
wherein the manufacturing process includes the following steps:
an excitation step (S3) of applying a magnetic field to said high-permeability magnetic elements (12) dispersed in said scanning region (13) by means of a magnetic field generator (85) while passing the scanning region (13) between the magnetic field generator (85) and a magnetic sensor (86),
a step (S4) of detecting a detection signal for a change in standing of a magnetic shielding effect, which varies depending on the distribution of said high-permeability magnetic elements (12), by means of the magnetic sensor (86), as the scanning region (13) crosses the magnetic field,
a step (S5) of obtaining a cipher code by enciphering the detection signal, and
a step (S6) of recording the cipher code in a code indicator section (15) of the checking object (10); and
wherein the collating process includes the following steps:
an excitation step (S3) of applying the magnetic field to said high-permeability magnetic elements (12) in said scanning region (13) by means of the magnetic field generator (85) while passing the scanning region (13) between the magnetic field generator (85) and the magnetic sensor (86),
a step (S4) of detecting the detection signal for the change in standing of a magnetic shielding effect, which varies depending on the distribution of said high-permeability magnetic elements (12), by means of the magnetic sensor (86), as the scanning region (13) crosses the magnetic field,
a step (S12) of reading the cipher code recorded in the code indicator section (15),
a step (S13) of reproducing a code for collation by decoding the cipher code, and
a step (S14) of collating the collation code reproduced in the code reproduction step (S13) with the detection signal detected in the detection step (S4) and concluding that the checking object (10) is real when the collation code and the detection signal correspond to each other.

6. An apparatus for checking the authenticity of a checking object (10) which includes a base (11) formed of a nonmagnetic material, a scanning region (13) provided in the base (11), a code indicator section (15) provided in the base (11), and a number of high-permeability magnetic elements randomly dispersed in the scanning region; said apparatus comprising
scanning means for scanning the scanning region (13) of the checking object (10), wherein said scanning means includes a first exciting coil (85) for applying a first alternating field to said high-permeability magnetic elements dispersed in said scanning region (13), a first magnetic sensor (86) opposed to the first exciting coil (85), a transportation mechanism (26) for passing the scanning region (13) between the first exciting coil (85) and the first magnetic sensor (86), a second exciting coil (90) situated in a position magnetically isolated from the first exciting coil (85) and used to generate a second alternating field identical with the first alternating field, a second magnetic sensor (91) opposed to the second exciting coil (90), and a circuit (94) for fetching a detection signal corresponding to the difference between an output produced in the first magnetic sensor (86) and an output produced in the second magnetic sensor (91) as the scanning region (13) passes between the first exciting coil (85) and the first magnetic sensor (86);
code writing means (51) for recording a code corresponding to the detection signal in the code indicator section (15) of the checking object (10);
reading means (52) for reading the code recorded in the code indicator section (15); and
means (95) for collating the code read by the reading means (52) with the detection signal and concluding that the checking object (10) is real when the read code and the detection signal correspond to each other.

7. An apparatus according to claim 6, wherein a distance (d1) from the first exciting coil (85) to the first magnetic sensor (86) and a distance (d2) from the second exciting coil (90) to the second magnetic sensor (91) are equal, said first and second exciting coils (85,90) have the same electromagnetic properties, said first and second magnetic sensors (86,91) have the same electromagnetic properties, and said magnetic sensors (86,91) are connected to each other by means of the circuit (94) for fetching the detection signal.

## Patentansprüche

1. Verfahren zum Prüfen der Echtheit eines Prüfobjekts (10), das eine aus nichtmagnetischem Material gebildete Basis (11) und eine Anzahl beliebig in einem Abtastbereich (13) der Basis (11) verstreute, hochdurchlässige magnetische Elemente (12) aufweist, umfassend einen Herstellungsprozeß zur Herstellung des Prüfobjekts (10) sowie einen Kollationierungsprozeß (collating process) zum Prüfen des Prüfobjekts (10), wobei der Herstellungsprozeß folgende Schritte umfaßt:
einen Erregungsschritt (S3) des Anlegens eines Vorspannungs-Magnetfeldes an die in dem Abtastbereich (13) verstreuten, hochdurchlässigen magnetischen Elemente (12) und des Bewegens des Abtastbereichs (13) relativ zum Magnetfeld,
einen Schritt (S4) des Abgreifens einer Zustandsänderung (change in stand) eines Magnetflusses, der sich in Abhängigkeit von der Verteilung der hochdurchlässigen magnetischen Elemente (12) ändert, wodurch ein Detektionssignal für die Änderung des Magnetflusses erfaßt wird, wenn der Abtastbereich (13) das Magnetfeld passiert,
einen Schritt (S5) des Erhaltens eines (Ziffern-)Codes durch Verschlüsseln (enciphering) des Detektionssignals, und
einen Schritt (S6) des Aufzeichnens des (Ziffern-)Codes in einer Codeindikatorsektion (15) des Prüfobjekts (10), und
wobei der Kollationierungsprozeß folgende Schritte umfaßt:
einen Erregungsschritt (S3) des Anlegens des Vorspannungs-Magnetfeldes an die in dem Abtastbereich (13) verstreuten, hochdurchlässigen magnetischen Elemente (12) und des Bewegens des Abtastbereichs (13) relativ zum Magnetfeld,
einen Schritt (S4) des Abgreifens einer Zustandsänderung des Magnetflusses, der sich in Abhängigkeit von der Verteilung der hochdurchlässigen magnetischen Elemente (12) ändert, wodurch ein Detektionssignal für die Änderung des Magnetflusses erfaßt wird, wenn der Abtastbereich (13) das Magnetfeld passiert,
einen Schritt (S12) des Auslesens des in der Codeindikatorsektion (15) aufgezeichneten (Ziffern-)Codes,
einen Schritt des Reproduzierens eines Codes zum Kollationieren durch Decodieren des Zifferncodes, und
einen Schritt (S14) des Kollationierens des im Codereproduzierschritt reproduzierten Kollationierungscodes mit dem im Detektionsschritt (S4) erfaßten Detektionssignal, und des Folgerns, daß das Prüfobjekt (10) echt ist, wenn der Kollationierungscode und das Detektionssignal einander entsprechen.

2. Prüfverfahren nach Anspruch 1, wobei der Erregungsschritt (S3) den Schritt des Anlegens des Vorspannungs-Magnetfeldes an einen Kern (41) mit einem Spalt (42) durch eine Erregerspule (31) und eine Gleichstromversorgungsschaltung (45) aufweist, und der Abgreifschritt (S4) den Schritt des Erfassens des Detektionssignals für die Änderung des Magnetflusses, die bei Änderung der Permeabilität bzw. Durchlässigkeit des Spalts (42) in Abhängigkeit von der Verteilung der magnetischen Elemente (12) hervorgerufen wird, mittels einer Spule (32) für die Erfassung von Induktionsspannung aufweist.

3. Vorrichtung zum Prüfen der Echtheit eines Prüfobjekts (10), der eine aus nichtmagnetischem Material gebildete Basis (11), einen in der Basis (11) vorgesehenen Abtastbereich (13), eine in der Basis (11) vorgesehene Codeindikatorsektion (15) und eine Anzahl beliebig über den Abtastbereich (13) verstreute, hochdurchlässige magnetische Elemente (12) aufweist, wobei die Vorrichtung umfaßt:
einen Transportmechanismus (26) zum Bewegen des Prüfobjekts (10),
eine Abtasteinrichtung zum Abtasten des Abtastbereichs (13), wobei die Abtasteinrichtung Erregermittel (31,41,45) zum Anlegen eines Gleichstrom-Vorspannungs-Magnetfelds an die in dem Abtastbereich verstreuten, hochdurchlässigen magnetischen Elemente aufweist, sowie eine Detektionseinrichtung (32) zum Abgreifen einer Zustandsänderung eines Magnetflusses aufweist, der sich in Abhängigkeit von der Verteilung der hochdurchlässigen magnetischen Elemente (12) ändert, wodurch ein Detektionssignal für die Änderung des Magnetflusses erfaßt wird, wenn der Abtastbereich (13) das Magnetfeld passiert,
eine Codeschreibeinrichtung (51) zum Aufzeichnen eines dem Detektionssignal entsprechenden Codes in der Codeindikatorsektion (15) des Prüfobjektes (10),
eine Ausleseeinrichtung (52) zum Auslesen des in der Codeindikatorsektion (15) aufgezeichneten Codes, sowie
eine Einrichtung (50) zum Kollationieren des durch die Ausleseeinrichtung (52) ausgelesenen Codes mit dem durch die Detektionseinrichtung (32) erfaßten Detektionssignals und zum Folgern, daß das Prüfobjekt (10) echt ist, wenn der ausgelesene Code und das Detektionssignal einander entsprechen.

4. Vorrichtung nach Anspruch 3, wobei die Erregermittel (31,41,45) einen Kern (41) mit einem Spalt (42), eine Erregerspule (31) auf dem Kern (41) und eine mit der Spule (31) verbundene Gleichstromversorgungsschaltung (45) umfassen, und die Detektionseinrichtung (32) eine Spule (32) zum Detektieren von Induktionsspannung auf dem Kern (41) ist.

5. Verfahren zum Prüfen der Echtheit eines Prüfobjekts (10), der eine aus nichtmagnetischem Material gebildete Basis (11) und eine Anzahl in einem Abtastbereich (13) der Basis (11) verstreute, hochdurchlässige magnetische Elemente (12) aufweist, umfassend einen Herstellungsprozeß zur Herstellung des Prüfobjekts (10) sowie einen Kollationierungsprozeß zum Prüfen des Prüfobjekts (10),
wobei der Herstellungsprozeß folgende Schritte umfaßt:
einen Erregungsschritt (S3) des Anlegens eines Magnetfeldes an die in dem Abtastbereich (13) verstreuten, hochdurchlässigen magnetischen Elemente (12) mittels eines Magnetfeldgenerators (85), während der Abtastbereich (13) zwischen dem Magnetfeldgenerator (85) und einem Magnetsensor (86) hindurchbewegt wird,
einen Schritt (S4) des Erfassens eines Detektionssignals für eine Zustandsänderung eines magnetischen Abschirmeffekts, der sich in Abhängigkeit von der Verteilung der hochdurchlässigen magnetischen Elemente (12) ändert, durch den Magnetsensor (86), wenn der Abtastbereich (13) das Magnetfeld kreuzt,
einen Schritt (S5) des Erhaltens eines (Ziffern-)Codes durch Verschlüsseln des Detektionssignals, sowie
einen Schritt (S6) des Aufzeichnens des (Ziffern-)Codes in einer Codeindikatorsektion (15) des Prüfobjekts (10), und
wobei der Kollationierungsprozeß folgende Schritte umfaßt:
einen Erregungsschritt (S3) des Anlegens eines Magnetfeldes an die hochdurchlässigen magnetischen Elemente (12) in dem Abtastbereich (13) mittels eines Magnetfeldgenerators (85), während der Abtastbereich (13) zwischen dem Magnetfeldgenerator (85) und einem Magnetsensor (86) hindurchbewegt wird,
einen Schritt (S4) des Erfassens eines Detektionssignals für die Zustandsänderung eines magnetischen Abschirmeffekts, der sich in Abhängigkeit von der Verteilung der hochdurchlässigen magnetischen Elemente (12) ändert, durch den Magnetsensor (86), wenn der Abtastbereich (13) das Magnetfeld kreuzt,
einen Schritt (S12) des Auslesens des in der Codeindikatorsektion (15) aufgezeichneten (Ziffern-)Codes,
einen Schritt (S13) des Reproduzierens eines Codes zum Kollationieren durch Decodieren des (Ziffern-)Codes, sowie
einen Schritt (S14) des Kollationierens des im Codereproduzierschritt (S13) reproduzierten Kollationierungscodes mit dem im Detektionsschritt (S4) erfaßten Detektionssignal, und des Folgerns, daß das Prüfobjekt (10) echt ist, wenn der Kollationierungscode und das Detektionssignal einander entsprechen.

6. Vorrichtung zum Prüfen der Echtheit eines Prüfobjekts (10), der eine aus nichtmagnetischem Material gebildete Basis (11), einen in der Basis (11) vorgesehenen Abtastbereich (13), eine in der Basis (11) vorgesehene Codeindikatorsektion (15) und eine Anzahl beliebig in dem Abtastbereich (13) verstreute, hochdurchlässige magnetische Elemente aufweist, wobei die Vorrichtung umfaßt:
eine Abtasteinrichtung zum Abtasten des Abtastbereichs (13) des Prüfobjekts (10), wobei die Abtasteinrichtung umfaßt: eine erste Erregerspule (85) zum Anlegen eines ersten Wechselfelds an die in dem Abtastbereich (13) verstreuten, hochdurchlässigen magnetischen Elemente, einen der ersten Erregerspule (85) gegenüberliegenden ersten Magnetsensor (86), einen Transportmechanismus (26) zum Passierenlassen des Abtastbereichs (13) zwischen der ersten Erregerspule (85) und dem ersten Magnetsensor (86), eine zweite Erregerspule (90), die sich in einer von der ersten Erregerspule (85) magnetisch isolierten Lage befindet und zur Erzeugung eines zweiten, mit dem ersten Wechselfeld identischen Wechselfeldes benutzt wird, einen der zweiten Erregerspule (90) gegenüberliegenden, zweiten Magnetsensor (91), sowie eine Schaltung (94) zum Abrufen eines Detektionssignals, das der Differenz zwischen einem im ersten Magnetsensor (86) erzeugten Ausgang(ssignal) und einem im zweiten Magnetsensor (91) erzeugten Ausgang(ssignal) entspricht, wenn der Abtastbereich (13) zwischen der ersten Erregerspule (85) und dem ersten Magnetsensor (86) hindurchläuft,
eine Codeschreibeinrichtung (51) zum Aufzeichnen eines dem Detektionssignal entsprechenden Codes in der Codeindikatorsektion (15) des Prüfobjekts (10),
eine Ausleseeinrichtung (52) zum Auslesen des in der Codeindikatorsektion (15) aufgezeichneten Codes, sowie
eine Einrichtung (50) zum Kollationieren (collating) des durch die Ausleseeinrichtung (52) ausgelesenen Codes mit dem Detektionssignals und zum Folgern, daß das Prüfobjekt (10) echt ist, wenn der eingelesene Code und das Detektionssignal einander entsprechen.

7. Vorrichtung nach Anspruch 6, wobei ein Abstand (d1) von der ersten Erregerspule (85) zum ersten Magnetsensor (86) und ein Abstand (d2) von der zweiten Erregerspule (90) zum zweiten Magnetsensor (91) gleich ist, wobei die ersten und zweiten Erregerspulen (85,90) dieselben elektromagnetischen Eigenschaften aufweisen, die ersten und zweiten Magnetsensoren (86,91) dieselben elektromagnetischen Eigenschaften aufweisen, und die Magnetsensoren (86,91) miteinander über den Schaltkreis (94) zum Abrufen des Detektionssignals verbunden sind.

## Revendications

1. Procédé de vérification de l'authenticité d'un objet de vérification (10) qui comporte une base (11) formée dans un matériau non-magnétique et un certain nombre d'éléments magnétiques de haute perméabilité (12) répartis au hasard dans une région d'exploration (13) de la base (11), comprenant un processus de fabrication pour fabriquer l'objet de vérification (10) et un processus d'interclassement pour vérifier cet objet (10),
dans lequel le processus de fabrication inclut les étapes suivantes:
une étape d'excitation (S3) consistant à appliquer un champ magnétique de polarisation auxdits éléments magnétiques de haute perméabilité (12) répartis dans ladite région d'exploration (13) et à déplacer la région d'exploration (13) relativement au champ magnétique,
une étape (S4) consistant à recueillir un changement d'un flux magnétique, qui varie selon la distribution desdits éléments magnétiques de haute perméabilité (12), détectant ainsi un signal de détection du changement du flux magnétique, lorsque la région d'exploration (13) traverse le champ magnétique,
une étape (S5) consistant à obtenir un code chiffré par chiffrage du signal de détection, et
une étape (S6) consistant à enregistrer le code chiffré dans une partie indicatrice de code (15) de l'objet de vérification (10); et
dans lequel le processus d'interclassement inclut les étapes suivantes:
une étape d'excitation (S3) consistant à appliquer un champ magnétique de polarisation auxdits éléments magnétiques de haute perméabilité (12) répartis dans ladite région d'exploration (13) et à déplacer la région d'exploration (13) relativement au champ magnétique,
une étape (S4) consistant à recueillir un changement d'un flux magnétique, qui varie selon la distribution desdits éléments magnétiques de haute perméabilité (12), détectant ainsi le signal de détection du changement du flux magnétique, lorsque la région d'exploration (13) traverse le champ magnétique,
une étape (S12) consistant à lire le code chiffré enregistré dans la partie indicatrice de code (15),
une étape (S13) consistant à reproduire un code d'interclassement par décodage du code chiffré, et
une étape (S14) consistant à interclasser le code d'interclassement reproduit au cours de l'étape de reproduction de code (S13) avec le signal de détection détecté au cours de l'étape de détection (S4) et à conclure que l'objet (10) est réel lorsque le code d'interclassement et le signal de détection se correspondent.

2. Procédé de vérification selon la revendication 1, dans lequel ladite étape d'excitation (S3) inclut l'étape consistant à appliquer le champ de polarisation à un noyau (41) ayant un entrefer (42), au moyen d'une bobine d'excitation (31) et d'un circuit d'alimentation électrique continue (45), et dans lequel ladite étape de recueil (S4) inclut l'étape consistant à détecter le signal de détection d'un changement du flux magnétique provoqué lorsque la perméabilité de l'entrefer (42) varie selon la distribution des éléments magnétiques (12), au moyen d'une bobine (32) pour une détection de tension induite.

3. Appareil de vérification de l'authenticité d'un objet de vérification (10) qui comporte une base (11) formée dans un matériau non-magnétique, une région d'exploration (13) de la base (11), une partie indicatrice de code (15) prévue dans la base (11) et un certain nombre d'éléments magnétiques de haute perméabilité répartis au hasard dans la région d'exploration; ledit appareil comprenant
un mécanisme de transport (26) pour déplacer l'objet de vérification (10);
un moyen de balayage pour balayer la région d'exploration (13),
dans lequel ledit moyen de balayage inclut un moyen d'excitation (31, 41, 45) pour appliquer un champ magnétique de polarisation continue auxdits éléments magnétiques de haute perméabilité répartis dans la région d'exploration (13), et un moyen de détection (32) pour recueillir un changement du flux magnétique, qui varie selon la distribution desdits éléments magnétiques de haute perméabilité (12), détectant ainsi un signal de détection du changement du flux magnétique, lorsque la région d'exploration (13) traverse le champ magnétique de polarisation,
un moyen d'écriture de code (51) pour enregistrer un code correspondant au signal de détection dans la partie indicatrice de code (15) de l'objet de vérification (10);
un moyen de lecture (52) pour lire le code enregistré dans la partie indicatrice de code (15); et
un moyen (50) pour interclasser le code lu par le moyen de lecture (52) avec le signal de détection détecté par le moyen de détection (32) et conclure que l'objet de vérification (10) est réel lorsque le code lu et le signal de détection se correspondent.

4. Appareil selon la revendication 3, dans lequel ledit moyen d'excitation (31, 41, 45) inclut un noyau (41) ayant un entrefer (42), une bobine d'excitation (31) sur le noyau (41) et un circuit d'alimentation électrique continue (45) relié à la bobine (31), et dans lequel ledit moyen de détection (32) est une bobine (32) pour une détection de tension induite sur le noyau (41).

5. Procédé pour vérifier l'authenticité d'un objet de vérification (10) qui comporte une base (11) formée dans un matériau non-magnétique et un certain nombre d'éléments magnétiques de haute perméabilité (12) répartis au hasard dans une région d'exploration (13) de la base (11), comprenant un processus de fabrication pour fabriquer l'objet de vérification (10) et un processus d'interclassement pour vérifier cet objet (10),
dans lequel le processus de fabrication inclut les étapes suivantes:
une étape d'excitation (S3) consistant à appliquer un champ magnétique auxdits éléments magnétiques de haute perméabilité (12) répartis dans ladite région d'exploration (13) au moyen d'un générateur de champ magnétique (85) en déplaçant la région d'exploration (13) entre le générateur de champ magnétique (85) et un capteur magnétique (86),
une étape (S4) consistant à détecter un signal de détection d'un changement d'un effet d'écran magnétique variant selon la distribution desdits éléments magnétiques de haute perméabilité (12), au moyen du capteur magnétique (86), lorsque la région d'exploration (13) traverse le champ magnétique,
une étape (S5) consistant à obtenir un code chiffré par chiffrage du signal de détection, et
une étape (S6) consistant à enregistrer le code chiffré dans une partie indicatrice de code (15) de l'objet de vérification (10); et
dans lequel le processus d'interclassement inclut les étapes suivantes:
une étape d'excitation (S3) consistant à appliquer le champ magnétique auxdits éléments magnétiques de haute perméabilité (12) dans ladite région d'exploration (13) au moyen du générateur de champ magnétique (85) en passant la région d'exploration (13) entre le générateur de champ magnétique (85) et le capteur magnétique (86),
une étape (S4) consistant à détecter le signal de détection d'un changement d'un effet d'écran magnétique, variant selon la distribution desdits éléments magnétiques de haute perméabilité (12), au moyen du capteur magnétique (86), lorsque la région d'exploration (13) traverse le champ magnétique,
une étape (S12) consistant à lire le code chiffré enregistré dans la partie indicatrice de code (15),
une étape (S13) consistant à reproduire un code d'interclassement par décodage du code chiffré, et
une étape (S14) consistant à interclasser le code d'interclassement reproduit au cours de l'étape de reproduction de code (S13) avec le signal de détection obtenu au cours de l'étape de détection (S4) et à conclure que l'objet (10) est réel lorsque le code d'interclassement et le signal de détection se correspondent.

6. Appareil de vérification de l'authenticité d'un objet de vérification (10) qui comporte une base (11), formée dans un matériau non-magnétique, une région d'exploration (13) prévue dans la base (11), une partie indicatrice de code (15) prévue dans la base (11), et un certain nombre d'éléments magnétiques de haute perméabilité répartis au hasard dans la région d'exploration; ledit appareil comprenant
un moyen de balayage pour balayer la région d'exploration (13) de l'objet de vérification (10), dans lequel ledit moyen de balayage inclut une première bobine d'excitation (85) pour appliquer un premier champ alternatif auxdits éléments magnétiques de haute perméabilité répartis dans ladite région d'exploration (13), un premier capteur magnétique (86) opposé à la première bobine d'excitation (85), un mécanisme de transport (26) pour faire passer la région d'exploration (13) entre la première bobine d'excitation (85) et le premier capteur magnétique (86), une seconde bobine d'excitation (90) dans une position magnétiquement isolée de la première bobine d'excitation (85) et utilisée pour générer un second champ alternatif identique au premier, un second capteur magnétique (91) opposé à la seconde bobine d'excitation (90), et un circuit (94) pour obtenir un signal de détection correspondant à la différence entre une sortie produite par le premier capteur magnétique (86) et une sortie produite par le second capteur magnétique (91) lorsque la région d'exploration (13) passe entre la première bobine d'excitation (85) et le premier capteur magnétique (86);
un moyen d'écriture de code (51) pour enregistrer un code correspondant au signal de détection dans la partie indicatrice de code (15) de l'objet de vérification (10);
un moyen de lecture (52) pour lire le code enregistré dans la partie indicatrice de code (15); et
un moyen (95) pour interclasser le code lu par le moyen de lecture (52) avec le signal de détection et conclure que l'objet de vérification (10); est réel lorsque le code lu et le signal de détection se correspondent.

7. Appareil selon la revendication 6, dans lequel la distance (d1) entre la première bobine d'excitation (85) et le premier capteur magnétique (86) et la distance (d2) entre la seconde bobine d'excitation (90) et le second capteur magnétique (91) sont égales, lesdites première et seconde bobines d'excitation (85, 90) ont les mêmes propriétés électromagnétiques, lesdits premier et second capteurs magnétiques (86, 91) ont les mêmes propriétés électromagnétiques et lesdits capteurs magnétiques (86, 91) sont reliés l'un à l'autre au moyen du circuit (94) pour obtenir le signal de détection.
